# EUROPEAN PATENT SPECIFICATION

(11) **EP 4 559 432 B1**
(45) Date of publication and mention of the grant of the patent: **27.05.2026**
(21) Application number: 24209921.6
(22) Date of filing: 30.10.2024
(51) Int. Cl.: A61C 13/00, A61C 13/08, B23Q 17/00

(54) **DEVICE AND METHOD FOR PROCESSING AN ARTIFICIAL TOOTH**
VORRICHTUNG UND VERFAHREN ZUR BEARBEITUNG EINES KÜNSTLICHEN ZAHNS
DISPOSITIF ET PROCÉDÉ DE TRAITEMENT DE DENT ARTIFICIELLE

(30) Priority: 21.11.2023 KR 20230162581
(43) Date of publication of application: 28.05.2025
(73) Proprietor: Huvitz Co., Ltd., Anyang-si, Gyeonggi-do 14055 (KR)
(72) Inventor: KIM, Jin Ho, 14055 Anyang-si (KR); HA, Seung Suk, 14055 Anyang-si (KR); SHIM, Young Gil, 14055 Anyang-si (KR); LEE, Weon Joon, 14055 Anyang-si (KR)
(74) Representative: Henkel & Partner mbB

(56) References cited:
- KR-B1- 101 854 730
- US-A1- 2021 213 580
- US-A1- 2023 116 211

## Description

### FIELD OF THE DISCLOSURE

The present invention relates to a device and a method for processing artificial tooth, and more specifically, to a device and a method for processing artificial tooth capable of preventing a reference position measurement error of a workpiece.

### BACKGROUND

Prosthesis treatment is a dental treatment method that removes a damaged portion of tooth and mounts a dental prosthesis, that is an artificial tooth, on an area where the damaged portion is removed to restore tooth function.

In order to manufacture the artificial tooth, a three-dimensional shape scanner or the like is used to obtain a three-dimensional shape of an oral cavity structure where the artificial tooth will be located, and the shape of the required artificial tooth is designed using computer aided design (CAD). Then, based on the obtained shape data of the artificial tooth, an artificial tooth processing device operated by numerical control (NC) and computer aided manufacturing (CAM) software is used to process a workpiece such as ceramic into the shape of the artificial tooth.

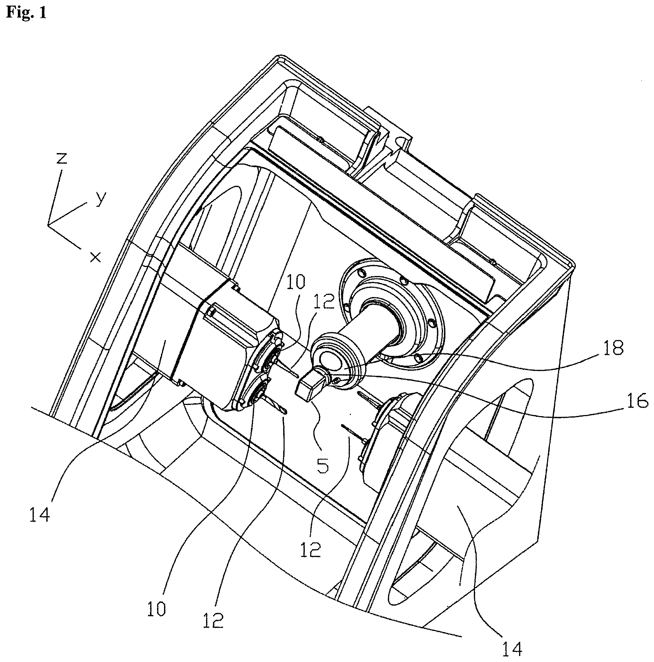

FIG. 1 is a view illustrating a structure of a typical artificial tooth processing device. As illustrated in FIG. 1, the artificial tooth processing device includes a spindle 10 that rotates using a motor (not illustrated), a processing tool 12 such as a drill or a burr that is mounted on an axis end of the spindle 10 and rotates together with the spindle 10, a spindle base 14 on which the spindle 10 is mounted and which is driven up and down (z-direction), and left and right (x-direction), and a workpiece mounting portion 18 moves back and forth (y-direction) and left and right (x-direction), and a workpiece mounting portion 18 on which a workpiece 5 is mounted and which is driven back and forth (y-direction). The workpiece 5 is mounted on the workpiece mounting portion 18 via a workpiece holder 16 that functions as a jig for fixing the workpiece 5. According to the shape data of the artificial tooth to be processed, the spindle base 14 moves up and down (z-direction) and left and right (x-direction), the workpiece mounting portion 18 moves back and forth (y-direction), and the spindle 10 and the processing tool 12 rotate at a high speed of approximately 30,000 to 50,000 rpm by a motor, come into contact with the workpiece 5, and process the workpiece 5 into the shape of the artificial tooth.

In such artificial tooth processing, a reference position (origin, processing reference point) of the workpiece 5 for artificial tooth processing and a reference position of the artificial tooth shape data must match so that the workpiece 5 may be accurately processed according to the artificial tooth shape data. Therefore, each time the workpiece 5 is processed, it is necessary to check the reference position where the workpiece 5 is mounted, and this is called "setting the reference position (set origin)'. Typically, in order to check the reference position of the workpiece 5, the position of the workpiece holder 16 and/or the workpiece 5 is detected. Specifically, while moving the processing tool 12 toward the workpiece holder 16, a change in a rotational load of the spindle 10 that occurs at the moment when the processing tool 12 comes into contact with one end of the workpiece holder 16 is detected to determine whether the processing tool 12 and the workpiece holder 16 and/or the workpiece 5 come into contact with each other. In order to detect a left-right (x-direction) position of the workpiece holder 16, a position where the end of the processing tool 12 comes into contact with the workpiece holder 16 while moving the processing tool 12 in the x-direction to detect the position where the rotational load of the processing tool 12 changes. In order to detect the up-down (z-direction) position of the workpiece holder 16, the position where a side of the processing tool 12 comes into contact with the workpiece holder 16 while moving the processing tool 12 in the z-direction to detect the position where the rotational load of the processing tool 12 changes.

In such a method of setting the reference position (set origin) of the conventional workpiece 5, since the processing tool 12 such as milling burr used for grinding the actual workpiece 5 comes into contact with the workpiece holder 16 while rotating at high speed, scratch or wear occurs on the workpiece holder 16 at the position where the workpiece holder 16 comes into contact with the processing tool 12. Accordingly, in a case where the reference position of the workpiece 5 is measured again for any reason, since the processing tool 12 comes into contact with the worn position of the workpiece holder 16, an error occurs in the measurement of the reference position. For example, in a case where two or more artificial teeth are processed using one workpiece 5, when the reference position is measured later in order to process another artificial tooth on the rear end of the workpiece 5 after one artificial tooth is processed and used on the front end of the workpiece 5, an error may occur in the measurement of the reference position due to wear on the portion of the workpiece holder 16 where the reference position is measured. That is, an error occurs in the subsequent measurement of the reference position due to a contact scratch that occurred in the previous measurement of the reference position. In particular, in a case where the workpiece 5 is made of a synthetic resin such as PMMA (polymethyl methacrylate), there are cases where two or more, for example, three artificial teeth are processed with one workpiece 5, and in this case, errors in the measurement of the reference position accumulate with each processing.

### [Prior Art Documents]

(Patent document 1) Korean Patent No. 10-1854730
(Patent document 2) Korean Patent Application Publication No. 10-2010-0003646
(Patent document 3) Korean Patent Application Publication No. 10-2018-0034896

### SUMMARY OF THE DISCLOSURE

### TECHNICAL OBJECTS

An object of the present invention is to provide a device and a method for processing artificial tooth capable of preventing a reference position measurement error of a workpiece.

Another object of the present invention is to provide a device and a method for processing artificial tooth capable of improving the accuracy of artificial tooth processing.

### TECHNICAL SOLUTION

In order to achieve the above object, the present invention provides an artificial tooth processing device according to claim 1. The artificial tooth processing device includes a spindle base 14 that is driven in up-down and left-right directions directions as z-direction and x-direction, respectively; a spindle 10 that is mounted on the spindle base 14 and rotated by a motor; a processing tool 12 that is mounted on an axis end of the spindle 10 and rotated together with the spindle 10; a workpiece holder 16 that fixes a workpiece 5; a workpiece mounting portion 18 on which the workpiece holder 16 is mounted, and which is rotationally driven about an axis of the workpiece holder 16 and driven in a back-forth direction as y-direction; and a control portion 50 configured to control driving of the spindle base 14 in the up-down and left-right directions, driving of the workpiece mounting portion 18 in rotation and in the back-forth direction, and driving of the spindle 10 and the processing tool 12 in rotation, wherein the control portion 50 is configured to set a first reference position of the workpiece 5 when the workpiece mounting portion 18 on which the workpiece 5 and the workpiece holder 16 are mounted is at a first rotational position, to process one end of the workpiece 5 based on the first reference position to form a first artificial tooth, and to rotate the workpiece mounting portion 18 and the workpiece holder 16 to a second rotational position by a predetermined angle r and to set a second reference position of the workpiece 5, and then to process an other end of the workpiece 5 based on the second reference position to form a second artificial tooth.

In addition, the present invention provides a method for processing an artificial tooth according to claim 1. The method for processing an artificial tooth uses an artificial tooth processing device including a spindle base 14 that is driven in up-down and left-right directions as z-direction and x-direction, respectively; a spindle 10 that is mounted on the spindle base 14 and rotated by a motor; a processing tool 12 that is mounted on an axis end of the spindle 10 and rotated together with the spindle 10; a workpiece holder 16 that fixes a workpiece 5; a workpiece mounting portion 18 on which the workpiece holder 16 is mounted, and which is rotationally driven about an axis of the workpiece holder 16 and driven in a back-forth direction as y-direction; and a control portion 50 configured to control driving of the spindle base 14 in the up-down and left-right directions, driving of the workpiece mounting portion 18 in rotation and in the back-forth direction, and driving of the spindle 10 and the processing tool 12 in rotation, the method including setting of a first reference position of the workpiece 5 when the workpiece mounting portion 18 on which the workpiece 5 and the workpiece holder 16 are mounted is at a first rotational position; forming of a first artificial tooth by processing one end of the workpiece 5 based on the first reference position; rotating of the workpiece mounting portion 18 and the workpiece holder 16 to a second rotational position by a predetermined angle r and setting a second reference position of the workpiece 5; and forming of a second artificial tooth by processing an other end of the workpiece 5 based on the second reference position.

### EFFECTS OF THE DISCLOSURE

The device and the method for processing artificial tooth according to the present invention may prevent a reference position measurement error of a workpiece, thereby improving the accuracy of artificial tooth processing.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a view illustrating a structure of a conventional artificial tooth processing device;
FIG. 2 is a view illustrating a structure of an artificial tooth processing device according to one embodiment of the present invention;
FIG. 3 is a view illustrating a state where a workpiece 5, a workpiece holder 16, and a workpiece mounting portion 18 used in an artificial tooth processing device and method according to the present invention are coupled; and
FIG. 4 is a view illustrating a state where a reference position of the workpiece 5 is set in the artificial tooth processing device and method according to the present invention.

### DETAILED DESCRIPTION OF THE PREFERRED EMBODIMENTS

Hereinafter, the present invention will be described in more detail with reference to the attached drawings. In the attached drawings, components that perform the same or similar functions as in the prior art are given the same drawing reference numerals. In addition, in the description of the present invention, terms such as up and down, left and right, and back and forth, horizontal, and vertical are used to indicate the relative positional relationship of components.

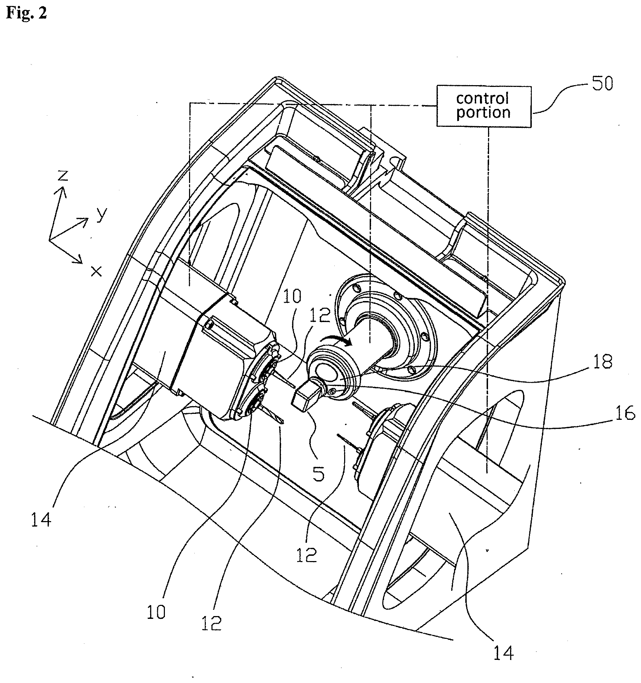

FIG. 2 is a view illustrating a structure of an artificial tooth processing device according to one embodiment of the present invention. As illustrated in FIG. 2, the artificial tooth processing device according to the present invention includes a spindle base 14 that is driven in the up-down (z-direction) and left-right (x-direction) directions, a spindle 10 that is mounted on the spindle base 14 and rotated by a motor (not illustrated), a processing tool 12 such as a drill or burr that is mounted on an axis end of the spindle 10 and rotated together with the spindle 10, a workpiece holder 16 that fixes a workpiece 5, a workpiece mounting portion 18 on which the workpiece holder 16 is mounted and which is rotationally driven about an axis of the workpiece holder 16 and driven in the back-forth direction (y-direction), and a control portion 50. The control portion 50 controls driving in the up-down (z-direction) direction and left-right (x-direction) direction of the spindle base 14, rotational driving and driving in the back-forth (y-direction) direction of the workpiece mounting portion 18, rotational driving of the spindle 10 and the processing tool 12, and the like to set a reference position of the workpiece 5, and process the workpiece 5 based on the set reference position to manufacture an artificial tooth of a desired shape.

The workpiece mounting portion 18 is rotationally driven about the axis (y-axis in FIG. 2) of the workpiece holder 16 (see an arrow in FIG. 2) and may be horizontally driven in the back-forth (y-direction). In a state of being fixed to the workpiece holder 16, the workpiece 5 may be rotated and horizontally moved in the back-forth direction according to the rotational driving and the horizontal driving in the back-forth direction of the workpiece mounting portion 18.

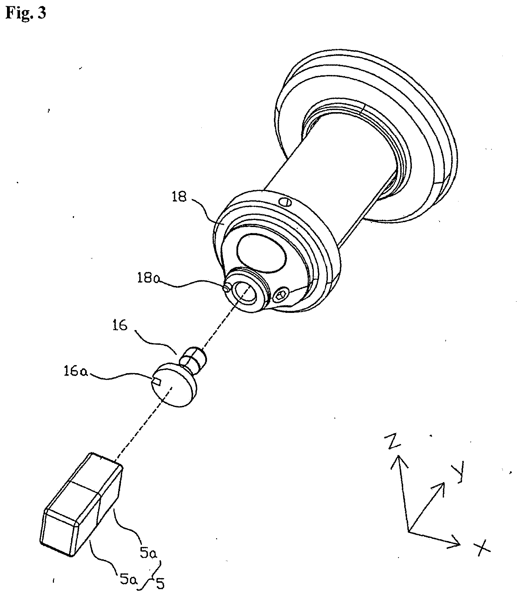

FIG. 3 is a view illustrating a state where the workpiece 5, the workpiece holder 16, and the workpiece mounting portion 18 used in the artificial tooth processing device and method according to the present invention are coupled. As illustrated in FIG. 3, the workpiece 5 is fixed to the workpiece holder 16 that functions as a jig for fixing the workpiece 5. The workpiece 5 may be made of a material capable of producing an artificial tooth, such as ceramic, synthetic resin such as PMMA (polymethyl methacrylate), or metal, and the workpiece holder 16 is typically made of metal. The workpiece 5 and the workpiece holder 16 may be coupled by typical means such as an adhesive. It is preferable that the workpiece holder 16 be coupled at a center of the workpiece 5, but it is not necessary for the workpiece holder 16 to be coupled exactly at the center of the workpiece 5. Since the workpiece 5 is ground from the outside to process the artificial tooth of a desired shape, it is sufficient for the workpiece holder 16 and the workpiece 5 to be coupled such that the final processed artificial tooth may be located within the workpiece 5.

The workpiece holder 16 may be coupled in a predetermined direction with respect to the workpiece mounting portion 18. For example, as illustrated in FIG. 3, a coupling groove 16a may be formed at one end of the workpiece holder 16, and a coupling projection 18a that fits into the coupling groove 16a may be formed at one end of the workpiece mounting portion 18. When the workpiece holder 16 is coupled to the workpiece mounting portion 18, the coupling projection 18a of the workpiece mounting portion 18 is coupled to the coupling groove 16a of the workpiece holder 16, so that the workpiece holder 16 and the workpiece mounting portion 18 may be coupled in a predetermined direction with respect to the workpiece mounting portion 18.

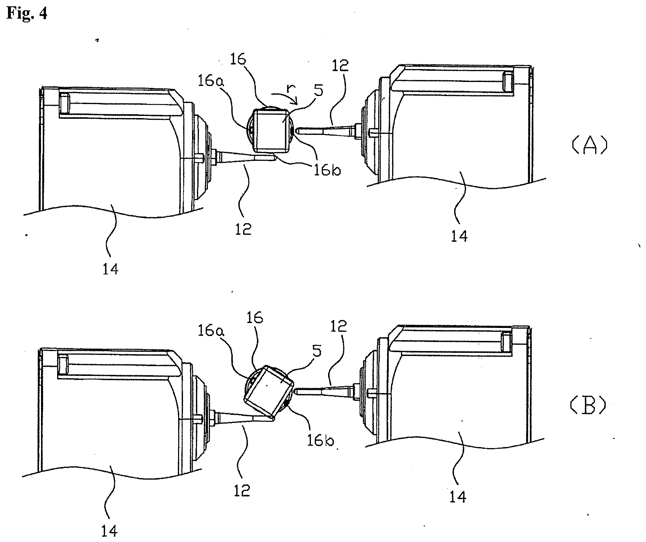

FIG. 4 is a view illustrating a state where the reference position of the workpiece 5 is set (set origin) in the artificial tooth processing device and method according to the present invention.

As illustrated in FIG. 4, in the artificial tooth processing device and method according to the present invention, the control portion 50 sets (measures) a first reference position of the workpiece 5 when the workpiece mounting portion 18 on which the workpiece 5 and the workpiece holder 16 are mounted is at a first rotational position (see A of FIG. 4). For example, the control portion 50 detects a position where a rotational load of the processing tool 12 changes when the end of the processing tool 12 comes into contact with the workpiece holder 16 or the workpiece 5 while moving one (right side in FIG. 4) processing tool 12 in the left-right direction (x-direction), and detects a position where the rotational load of the processing tool 12 changes when the side of the processing tool 12 comes into contact with the workpiece holder 16 or the workpiece 5 while moving one (left side in FIG. 4) processing tool 12 in the up-down direction (z-direction), thereby setting (measuring) the first reference position of the workpiece 5. That is, the positions in the up-down direction and the left-right direction of the workpiece 5 and the workpiece holder 16 are input to the control portion 50. Here, instead of the workpiece holder 16, the control portion 50 may detect the position of the workpiece 5 attached to the workpiece holder 16, or detect the positions of the workpiece holder 16 and the workpiece 5 sequentially to set (measure) the reference position of the workpiece 5. In this case, a wear portion 16b is formed on the workpiece holder 16 or the workpiece 5 that comes into contact with the processing tool 12.

When the first reference position of the workpiece 5 is set in this way, the control portion 50 processes one end of the workpiece 5, for example, the front end (5a, see FIG. 3), based on the first reference position to form the first artificial tooth.

Next, the control portion 50 rotates the workpiece mounting portion 18 and the workpiece holder 16 to the second rotational position by a predetermined angle r (see B of FIG. 4) and sets (measures) a second reference position of the workpiece 5. For example, the control portion 50 detects again a position where the end of the processing tool 12 comes into contact with the workpiece holder 16 or the workpiece 5 while moving one (right side in FIG. 4) processing tool 12 in the left-right direction (x-direction) and the rotational load of the processing tool 12 is changed, and detects a position where the side of the processing tool 12 comes into contact with the workpiece holder 16 or the workpiece 5 while moving one (left side in FIG. 4) processing tool 12 in the up-down direction (z-direction) and the rotational load of the processing tool 12 is changed, thereby setting (measuring) the second reference position of the workpiece 5.

Here, the second rotational position, i.e., the predetermined angle r at which the workpiece mounting portion 18 and the workpiece holder 16 rotate, is set such that the wear portion 16b formed by coming into contact with the processing tool 12 at the first rotational position does not come into contact with the processing tool 12 at the second rotational position. For example, the angle r between the first rotational position and the second rotational position of the workpiece mounting portion 18 may be 5 to 180 degrees, for example, 10 to 90 degrees, and specifically, 15 to 45 degrees. Here, if the angle r between the first rotational position and the second rotational position is too small, the wear portion 16b formed by coming into contact with the processing tool 12 at the first rotational position may come into contact with the processing tool 12 at the second rotational position, which may cause an error in setting (measuring) the second reference position. On the other hand, if the angle r between the first rotational position and the second rotational position is too large, there is no particular benefit.

As described above, when the second reference position of the workpiece 5 is set, the control portion 50 processes the other end of the workpiece 5, for example, the rear end (5b, see FIG. 3), based on the second reference position to form a second artificial tooth.

In the processing of the second artificial tooth, the operations of driving the spindle base 14 in the up-down direction (z-direction) and driving the workpiece mounting portion 18 in rotation and in the left-right (y-direction) direction, driving the spindle 10 and the processing tool 12 in rotation, and the like are performed entirely according to second artificial tooth shape data input to the control portion 50, i.e., the contents of a numerical control (NC) file. Accordingly, since the second reference position of the workpiece 5 is set at the position where the workpiece 5, the workpiece holder 16, and the workpiece mounting portion 18 are rotated by the predetermined angle r, it is preferable that the second artificial tooth shape data for processing the second artificial tooth, i.e., the numerical control (NC) file, is also converted based on the position rotated at the predetermined angle (r).

In addition, it is preferable that the control portion 50 stores identification information of the workpiece 5 on which the artificial tooth is processed two times or more and information on the angle r at which the reference position is previously set for the workpiece 5. In this case, after the workpiece 5 is processed for the first time to form the first artificial tooth, the workpiece 5 is removed from the workpiece mounting portion 18 and stored, and then when the workpiece 5 is mounted again on the workpiece mounting portion 18 at a necessary time to process the second artificial tooth, it is preferable because the workpiece holder 16 may be rotated to set the second reference position by referring to the identification information and the information on the angle r at which the reference position is set so as to avoid the angle r at which the reference position has already been set. This setting may be performed manually by a user or automatically by the control portion 50 through RFID (radio frequency identification) recognition, or the like.

According to the present invention, by varying the contact position of the processing tool 12 and the workpiece holder 16 for reference position setting (set origin) by rotating the workpiece holder 16 (for example, in the direction of the arrow in FIG. 2), the reference position setting may be performed by avoiding the worn portion 16b caused by the previous processing during secondary processing or recycling of the workpiece 5.

Although the present invention has been described with reference to the attached drawings and exemplary embodiments, the present invention is not limited to the contents illustrated in the drawings and the embodiments described above, but by the appended claims. In addition, although drawing symbols are used in the claims below to aid understanding, the scope of the claims below is not limited to the drawing symbols and the contents illustrated in the drawings.

## Claims

1. An artificial tooth processing device comprising:
a spindle base (14) that is driven in up-down and left-right directions as z-direction and x-direction, respectively;
a spindle (10) that is mounted on the spindle base (14) and rotated by a motor;
a processing tool (12) that is mounted on an axis end of the spindle (10) and rotated together with the spindle (10);
a workpiece holder (16) that fixes a workpiece (5);
a workpiece mounting portion (18) on which the workpiece holder (16) is mounted, and which is rotationally driven about an axis of the workpiece holder (16) and driven in a back-forth direction as y-direction; and
a control portion (50) configured to control driving of the spindle base (14) in the up-down and left-right directions, driving of the workpiece mounting portion (18) in rotation and in the back-forth direction, and driving of the spindle (10) and the processing tool (12) in rotation,
wherein the control portion (50) is configured to set a first reference position of the workpiece (5) when the workpiece mounting portion (18) on which the workpiece (5) and the workpiece holder (16) are mounted is at a first rotational position, to process one end of the workpiece (5) based on the first reference position to form a first artificial tooth, **characterized in that** the control portion (50) is configured to rotate the workpiece mounting portion (18) and the workpiece holder (16) to a second rotational position by a predetermined angle r and to set a second reference position of the workpiece (5), and then to process an other end of the workpiece (5) based on the second reference position to form a second artificial tooth.

2. The artificial tooth processing device of claim 1, wherein the control portion (50) is configured to detect a position where a rotational load of the processing tool (12) changes when the end of the processing tool (12) comes into contact with the workpiece holder (16) or the workpiece (5) while moving any one processing tool (12) in the left-right direction, and to detect a position where the rotational load of the processing tool (12) changes when the side of the processing tool (12) comes into contact with the workpiece holder (16) or the workpiece (5) while moving any one processing tool (12) in the up-down direction, so that the reference position of the workpiece (5) is set.

3. The artificial tooth processing device of claim 1, wherein the predetermined angle r at which the workpiece mounting portion (18) and the workpiece holder (16) rotate is set such that the wear portion (16b) formed by coming into contact with the processing tool (12) at the first rotational position does not come into contact with the processing tool (12) at the second rotational position.

4. The artificial tooth processing device of claim 1, wherein second artificial tooth shape data for processing the second artificial tooth is also converted based on the position rotated at the predetermined angle r.

5. The artificial tooth processing device of claim 1, wherein the control portion (50) is configured to store identification information of the workpiece (5) on which the artificial tooth is processed two times or more and information on the angle r at which the reference position is previously set for the workpiece (5).

6. A method for processing an artificial tooth using an artificial tooth processing device including a spindle base (14) that is driven in up-down and left-right directions as z-direction and x-direction, respectively; a spindle (10) that is mounted on the spindle base (14) and rotated by a motor; a processing tool (12) that is mounted on an axis end of the spindle (10) and rotated together with the spindle (10); a workpiece holder (16) that fixes a workpiece (5); a workpiece mounting portion (18) on which the workpiece holder (16) is mounted, and which is rotationally driven about an axis of the workpiece holder (16) and driven in a back-forth direction as y-direction; and a control portion (50) configured to control driving of the spindle base (14) in the up-down and left-right directions, driving of the workpiece mounting portion (18) in rotation and in the back-forth direction, and driving of the spindle (10) and the processing tool (12) in rotation, the method comprising:
setting of a first reference position of the workpiece (5) when the workpiece mounting portion (18) on which the workpiece (5) and the workpiece holder (16) are mounted is at a first rotational position;
**characterized in that** the method further comprises:
forming of a first artificial tooth by processing one end of the workpiece (5) based on the first reference position;
rotating of the workpiece mounting portion (18) and the workpiece holder (16) to a second rotational position by a predetermined angle r and setting a second reference position of the workpiece (5); and
forming of a second artificial tooth by processing an other end of the workpiece (5) based on the second reference position.

## Patentansprüche

1. Vorrichtung zur Bearbeitung eines künstlichen Zahns, umfassend:
eine Spindelbasis (14), die in Aufwärts-Abwärts-Richtung und in Links-Rechts-Richtung als z-Richtung bzw. x-Richtung angetrieben wird;
eine Spindel (10), die auf der Spindelbasis (14) montiert ist und von einem Motor gedreht wird;
ein Bearbeitungswerkzeug (12), das an einem Achsenende der Spindel (10) montiert ist und zusammen mit der Spindel (10) gedreht wird;
einen Werkstückhalter (16), der ein Werkstück (5) fixiert;
einen Werkstückmontageabschnitt (18), auf dem der Werkstückhalter (16) montiert ist und der um eine Achse des Werkstückhalters (16) drehend angetrieben wird und in einer Vorwärts-Rückwärts-Richtung als y-Richtung angetrieben wird; und
einen Steuerabschnitt (50), der so konfiguriert ist, dass er das Antreiben der Spindelbasis (14) in der Aufwärts-Abwärts- und in der Links-Rechts-Richtung,
das Antreiben des Werkstückmontageabschnitts (18) in Drehung und in die Vorwärts-Rückwärts-Richtung und das Antreiben der Spindel (10) und des Bearbeitungswerkzeugs (12) in Drehung steuert,
wobei der Steuerabschnitt (50) so konfiguriert ist, dass er eine erste Referenzposition des Werkstücks (5) festlegt, wenn sich der Werkstückmontageabschnitt (18), auf dem das Werkstück (5) und der Werkstückhalter (16) montiert sind, in einer ersten Drehposition befindet, um ein Ende des Werkstücks (5) basierend auf der ersten Referenzposition zu bearbeiten und einen ersten künstlichen Zahn auszubilden, **dadurch gekennzeichnet, dass** der Steuerabschnitt (50) so konfiguriert ist, dass er den Werkstückmontageabschnitt (18) und den Werkstückhalter (16) um einen vorbestimmten Winkel r in eine zweite Drehposition dreht und eine zweite Referenzposition des Werkstücks (5) festlegt, und anschließend ein anderes Ende des Werkstücks (5) basierend auf der zweiten Referenzposition bearbeitet, um einen zweiten künstlichen Zahn auszubilden.

2. Vorrichtung zur Bearbeitung eines künstlichen Zahns nach Anspruch 1, wobei der Steuerabschnitt (50) so konfiguriert ist, dass er eine Position erkennt, an der sich eine Drehlast des Bearbeitungswerkzeugs (12) ändert, wenn das Ende des Bearbeitungswerkzeugs (12) in Links-Rechts-Richtung mit dem Werkstückhalter (16) oder dem Werkstück (5) in Kontakt kommt, während ein beliebiges Bearbeitungswerkzeug (12) in Links-Rechts-Richtung bewegt wird, und eine Position erkennt, an der sich die Drehlast des Bearbeitungswerkzeugs (12) ändert, wenn die Seite des Bearbeitungswerkzeugs (12) mit dem Werkstückhalter (16) oder dem Werkstück (5) in Kontakt kommt, während ein beliebiges Bearbeitungswerkzeug (12) in der Aufwärts-Abwärts-Richtung bewegt wird, so dass die Referenzposition des Werkstücks (5) festgelegt wird.

3. Vorrichtung zur Bearbeitung eines künstlichen Zahns nach Anspruch 1, wobei der vorbestimmte Winkel r, um den sich der Werkstückmontageabschnitt (18) und der Werkstückhalter (16) drehen, so festgelegt ist, dass der Verschleißabschnitt (16b), der durch Kontakt mit dem Bearbeitungswerkzeug (12) in der ersten Drehposition ausgebildet wird, in der zweiten Drehposition nicht mit dem Bearbeitungswerkzeug (12) in Kontakt kommt.

4. Vorrichtung zur Bearbeitung eines künstlichen Zahns nach Anspruch 1, wobei Formdaten für den zweiten künstlichen Zahn zur Bearbeitung des zweiten künstlichen Zahns ebenfalls basierend auf der um den vorbestimmten Winkel r gedrehten Position umgewandelt werden.

5. Vorrichtung zur Bearbeitung eines künstlichen Zahns nach Anspruch 1, wobei der Steuerabschnitt (50) so konfiguriert ist, dass er Identifikationsinformationen des Werkstücks (5), an dem der künstliche Zahn zwei- oder mehrmals bearbeitet wird, und Informationen über den Winkel r, bei dem die Referenzposition zuvor für das Werkstück (5) festgelegt wurde, speichert.

6. Vorrichtung zur Bearbeitung eines künstlichen Zahns unter Verwendung einer künstlichen Zahnbearbeitungsvorrichtung, die eine Spindelbasis (14), die in Aufwärts-Abwärts-Richtung und in Links-Rechts-Richtung als z-Richtung bzw. x-Richtung angetrieben wird; eine Spindel (10), die auf der Spindelbasis (14) montiert ist und von einem Motor gedreht wird; ein Bearbeitungswerkzeug (12), das an einem Achsenende der Spindel (10) montiert ist und zusammen mit der Spindel (10) gedreht wird; einen Werkstückhalter (16), der ein Werkstück (5) fixiert; einen Werkstückmontageabschnitt (18), auf dem der Werkstückhalter (16) montiert ist und der um eine Achse des Werkstückhalters (16) drehend angetrieben wird und in Vorwärts-Rückwärts-Richtung als y-Richtung angetrieben wird; und einen Steuerabschnitt (50), der so konfiguriert ist, dass er das Antreiben der Spindelbasis (14) in der Aufwärts-Abwärts- und Links-Rechts-Richtung, das Antreiben des Werkstückmontageabschnitts (18) in Drehung und in Vorwärts-Rückwärts-Richtung und das Antreiben der Spindel (10) und des Bearbeitungswerkzeugs (12) in Drehung steuert, umfasst, wobei das Verfahren umfasst:
Festlegen einer ersten Referenzposition des Werkstücks (5), wenn sich der Werkstückmontageabschnitt (18), auf dem das Werkstück (5) und der Werkstückhalter (16) montiert sind, in einer ersten Drehposition befindet;
**dadurch gekennzeichnet, dass** das Verfahren weiterhin umfasst:
Ausbilden eines ersten künstlichen Zahns durch Bearbeiten eines Endes des Werkstücks (5) basierend auf der ersten Referenzposition;
Drehen des Werkstückmontageabschnitts (18) und des Werkstückhalters (16) um einen vorbestimmten Winkel r in eine zweite Drehposition und Festlegen einer zweiten Referenzposition des Werkstücks (5); und
Ausbilden eines zweiten künstlichen Zahns durch Bearbeiten eines anderen Endes des Werkstücks (5) basierend auf der zweiten Referenzposition.

## Revendications

1. Dispositif de traitement de dent artificielle comprenant :
une base de broche (14) qui est entraînée dans les directions haut-bas et gauche-droite en tant que direction z et direction x, respectivement ;
une broche (10) montée sur la base de broche (14) et mise en rotation par un moteur ;
un outil de traitement (12) qui est monté sur une extrémité d'axe de la broche (10) et qui mise en rotation conjointement avec la broche (10) ;
un porte-pièce (16) qui fixe une pièce (5) ;
une partie de montage de pièce (18) sur laquelle le porte-pièce (16) est monté, et qui est entraînée en rotation autour d'un axe du porte-pièce (16) et entraînée dans une direction arrière-avant en tant que direction y ; et
une partie de commande (50) configurée pour commander l'entraînement de la base de broche (14) dans les directions haut-bas et gauche-droite, l'entraînement de la partie de montage de pièce (18) en rotation et dans la direction arrière-avant, et l'entraînement de la broche (10) et de l'outil de traitement (12) en rotation,
dans lequel la partie de commande (50) est configurée pour définir une première position de référence de la pièce (5) lorsque la partie de montage de pièce (18) sur laquelle la pièce (5) et le porte-pièce (16) sont montés se trouve dans une première position de rotation, pour traiter une extrémité de la pièce (5) sur la base de la première position de référence afin de former une première dent artificielle, **caractérisé en ce que** la partie de commande (50) est configurée pour faire tourner la partie de montage de pièce (18) et le porte-pièce (16) vers une seconde position de rotation selon un angle r prédéterminé et pour définir une seconde position de référence de la pièce (5), puis pour traiter une autre extrémité de la pièce (5) sur la base de la seconde position de référence pour former une seconde dent artificielle.

2. Dispositif de traitement de dent artificielle selon la revendication 1, dans lequel la partie de commande (50) est configurée pour détecter une position où une charge de rotation de l'outil de traitement (12) change lorsque l'extrémité de l'outil de traitement (12) entre en contact avec le porte-pièce (16) ou la pièce (5) tout en déplaçant un quelconque outil de traitement (12) dans la direction gauche-droite, et pour détecter une position où la charge de rotation de l'outil de traitement (12) change lorsque le côté de l'outil de traitement (12) entre en contact avec le porte-pièce (16) ou la pièce (5) tout en déplaçant un quelconque outil de traitement (12) dans la direction haut-bas, de sorte que la position de référence de la pièce (5) soit définie.

3. Dispositif de traitement de dent artificielle selon la revendication 1, dans lequel l'angle prédéterminé r auquel la partie de montage de pièce (18) et le porte-pièce (16) tournent est défini de telle sorte que la partie d'usure (16b) formée en entrant en contact avec l'outil de traitement (12) à la première position de rotation n'entre pas en contact avec l'outil de traitement (12) à la seconde position de rotation.

4. Dispositif de traitement de dent artificielle selon la revendication 1, dans lequel des données de forme de seconde dent artificielle pour le traitement de la seconde dent artificielle sont également converties sur la base de la position tournée à l'angle prédéterminé r.

5. Dispositif de traitement de dent artificielle selon la revendication 1, dans lequel la partie de commande (50) est configurée pour stocker des informations d'identification de la pièce (5) sur laquelle la dent artificielle est traitée deux fois ou plus et des informations sur l'angle r auquel la position de référence est précédemment définie pour la pièce (5).

6. Procédé de traitement d'une dent artificielle à l'aide d'un dispositif de traitement de dent artificielle comprenant une base de broche (14) qui est entraînée dans des directions haut-bas et gauche-droite en tant que direction z et direction x, respectivement ; une broche (10) qui est montée sur la base de broche (14) et mise en rotation par un moteur ; un outil de traitement (12) qui est monté sur une extrémité d'axe de la broche (10) et mis en rotation conjointement avec la broche (10) ; un porte-pièce (16) qui fixe une pièce (5) ; une partie de montage de pièce (18) sur laquelle le porte-pièce (16) est monté, et qui est entraînée en rotation autour d'un axe du porte-pièce (16) et entraînée dans une direction arrière-avant en tant que direction y ; et une partie de commande (50) configurée pour commander l'entraînement de la base de broche (14) dans les directions haut-bas et gauche-droite, l'entraînement de la partie de montage de pièce (18) en rotation et dans la direction arrière-avant, et l'entraînement de la broche (10) et de l'outil de traitement (12) en rotation, le procédé comprenant :
la définition d'une première position de référence de la pièce (5) lorsque la partie de montage de pièce (18) sur laquelle la pièce (5) et le porte-pièce (16) sont montés se trouve à une première position de rotation ;
**caractérisée en ce que** le procédé comprend en outre
la formation d'une première dent artificielle par le traitement d'une extrémité de la pièce (5) sur la base de la première position de référence ;
la rotation de la partie de montage de pièce (18) et du porte-pièce (16) vers une seconde position de rotation selon un angle prédéterminé r et la définition d'une seconde position de référence de la pièce (5) ; et
la formation d'une seconde dent artificielle par le traitement d'une autre extrémité de la pièce (5) sur la base de la seconde position de référence.
